# EUROPÄISCHE PATENTSCHRIFT

(11) **EP 3 313 611 B1**
(45) Veröffentlichungstag und Bekanntmachung des Hinweises auf die Patenterteilung: **05.10.2022**
(21) Anmeldenummer: 16727648.4
(22) Anmeldetag: 24.05.2016
(51) Int. Cl.: B23Q 41/06, G05B 19/418

(54) **VERFAHREN ZUR REDUZIERUNG EINES ENERGIEBEDARFS EINER WERKZEUGMASCHINE UND WERKZEUGMASCHINENSYSTEM**
METHOD FOR REDUCING THE ENERGY DEMAND OF A MACHINE TOOL AND MACHINE TOOL SYSTEM
PROCÉDÉ POUR RÉDUIRE UNE CONSOMMATION D'ÉNERGIE D'UNE MACHINE-OUTIL ET SYSTÈME DE MACHINE-OUTIL

(30) Priorität: 26.06.2015 DE 102015211941
(43) Veröffentlichungstag der Anmeldung: 02.05.2018
(73) Patentinhaber: ZF Friedrichshafen AG, 88046 Friedrichshafen (DE)
(72) Erfinder: XU, Yiwen, 94113 Tiefenbach (DE); YAKARIA, Herman, 88085 Langenargen (DE); KÖSLER, Tobias, 88045 Friedrichshafen (DE); ACKERMANN, Thomas, 88045 Friedrichshafen (DE); BAUER, Johannes, 97241 Bergtheim (DE)
(74) Vertreter: ZF Friedrichshafen AG
(86) Internationale Anmeldenummer: PCT/EP2016/061646
(87) Internationale Veröffentlichungsnummer: WO 2016/206895

(56) Entgegenhaltungen:
- EP-A1- 0 013 733
- WO-A1-2010/034333
- WO-A1-2013/131556
- DE-A1-102010 039 313
- DE-A1-102011 122 516
- DE-B1- 2 315 345
- JP-A- 2012 238 055
- US-A- 4 947 978

## Beschreibung

Die vorliegende Erfindung betrifft ein Verfahren zur Reduzierung eines Energiebedarfs einer Werkzeugmaschine gemäß dem Oberbegriff von Anspruch 1 und ein Werkzeugmaschinensystem gemäß dem Oberbegriff von Anspruch 6.

Im Stand der Technik ist es bekannt, Fertigungsmaschinen und Fertigungsanlagen mit einem energiesparenden Ruhemodus auszustatten, in welchen diese sich selbständig bei anhaltender Untätigkeit versetzen können. Das Vorhandensein des Ruhemodus bei einer immer größeren Zahl von Fertigungsmaschinen und Fertigungsanlagen trägt einerseits dem Gedanken des Umweltschutzes, insbesondere der Reduzierung von CO₂-Emissionen, Rechnung. Andererseits trägt der Ruhemodus aber auch zur Vermeidung von unnötigen Herstellungskosten bei, da gerade Fertigungsmaschinen und Fertigungsanlagen einen vergleichsweise hohen Energiebedarf aufweisen. Dies schlägt sich in nicht zu unterschätzenden Energiekosten nieder, welche die Herstellungskosten eines Produkts in die Höhe treiben und damit seine Wettbewerbsfähigkeit verringern.

In diesem Zusammenhang offenbart die DE 11 2009 004 354 T5 ein System und ein Verfahren zur Verringerung eines Ruheleistungsabflusses. Dabei weist eine Maschine eine Vielzahl von elektronischen Steuervorrichtungen auf, die elektrisch mit einer elektrischen Leistungsquelle einerseits über einen ersten elektrischen Schaltkreis durch ein erstes Relais und andererseits über einen zweiten elektrischen Schaltkreis durch ein zweites Relais verbunden sind. Eine Relaissteuervorrichtung ist mit der elektrischen Leistungsquelle über einen dritten elektrischen Schaltkreis verbunden und steht gleichzeitig in Verbindung mit dem ersten und dem zweiten Relais. Die Relaissteuervorrichtung ist derart konfiguriert, dass sie das erste Relais oder das zweite Relais ansprechend auf eine Leistungsanforderungsanzeige öffnet oder schließt. Somit kann ein unnötiger Leistungsabfluss in einem Ruhezustand der Maschine vermieden werden.

Die DE 10 2004 030 312 A1 offenbart eine Elektrowerkzeugsteuervorrichtung für ein Elektrowerkzeug. Die Steuervorrichtung wird während eines Arbeitseinsatzes des Elektrowerkzeugs mit der vollen Netzspannung beaufschlagt, während sie im Ruhezustand nur noch mit einer erheblich reduzierten Spannung versorgt wird. Gemäß der DE 10 2004 030 312 A1 erhält die Steuervorrichtung im Ruhezustand gerade so viel Spannung, dass sie eine Standby-Funktion ausführen kann. Die Standby-Funktion kann z.B. aus der elektrischen Versorgung eines Mikrocontrollers bzw. einer Elektronik zur Drehzahlregelung des Elektrowerkzeugs bestehen. Dies reduziert die Belastung der Steuervorrichtung und verbessert den Wirkungsgrad. Der Ruhezustand stellt also einen Energiesparmodus des Elektrowerkzeugs dar, um den Stromverbrauch abseits des Arbeitseinsatzes des Elektrowerkzeugs so gering wie möglich zu halten. Die DE 10 2010 039313 A1 offenbart ein Verfahren nach dem Oberbegriff von Anspruch 1.

Die bekannten Vorrichtungen und Verfahren sind jedoch insofern nachteilbehaftet, als dass sie sich auf den Energieverbrauch ausschließlich einer einzelnen Werkzeugmaschine konzentrieren, ohne deren Einbindung in ein System aus mehreren Werkzeugmaschinen zu berücksichtigen und insbesondere ohne deren energetisches Zusammenwirken mit dem System zu berücksichtigen. Mögliche Energieeinsparungen durch eine bessere Abstimmung der Werkzeugmaschine untereinander bleiben daher weitgehend unberücksichtigt.

Es ist eine Aufgabe der Erfindung, ein verbessertes Verfahren zur Reduzierung eines Energiebedarfs einer Werkzeugmaschine eines Werkzeugmaschinensystems vorzuschlagen.

Diese Aufgabe wird erfindungsgemäß durch das Verfahren zur Reduzierung eines Energiebedarfs einer Werkzeugmaschine gemäß Anspruch 1 gelöst. Vorteilhafte Ausgestaltungen und Weiterbildungen der Erfindung gehen aus den abhängigen Ansprüchen hervor.

Die Erfindung betrifft ein Verfahren zur Reduzierung eines Energiebedarfs einer Werkzeugmaschine eines Werkzeugmaschinensystems, wobei das Werkzeugmaschinensystem zumindest eine erste Werkzeugmaschine mit einer ersten Maschinentaktzeit und eine zweite Werkzeugmaschine mit einer zweiten Maschinentaktzeit umfasst, wobei gleiche Werkstücke zunächst der ersten und dann der zweiten Werkzeugmaschine in zeitlicher Abfolge zu einer Bearbeitung zugeführt werden und wobei die zweite Maschinentaktzeit kleiner als die erste Maschinentaktzeit ist. Das erfindungsgemäße Verfahren zeichnet sich dadurch aus, dass die Werkstücke nach der Bearbeitung durch die erste Werkzeugmaschine gesammelt werden, bevor sie der zweiten Werkzeugmaschine zugeführt werden.

Die Erfindung beruht also auf dem Gedanken, die Werkstücke nach der Bearbeitung durch die vergleichsweise langsamer arbeitende erste Werkzeugmaschine, welche entsprechend die vergleichsweise größere Maschinentaktzeit aufweist, nicht unmittelbar an die vergleichsweise schneller arbeitende zweite Werkzeugmaschine, welche die vergleichsweise kürzere Maschinentaktzeit aufweist, weiterzuführen. Stattdessen werden die Werkstücke nach der Bearbeitung durch die erste Werkzeugmaschine über einen vorbestimmbaren Zeitraum oder bis zum Erreichen einer vorbestimmbaren Anzahl von Werkstücken gesammelt, bevor sie gesammelt der zweiten Werkzeugmaschine zugeführt werden.

Die vergleichsweise schneller arbeitende zweite Werkzeugmaschine befindet sich somit einerseits für eine vergleichsweise größere zeitlich zusammenhängende Dauer im Arbeitsmodus, da ihr nicht einzelne Werkstücke, sondern die gesammelten Werkstücke gesammelt zugeführt werden. Andererseits befindet sie sich auch für eine vergleichsweise größere zeitlich zusammenhängende Dauer im Ruhemodus, während die Werkstücke nach der Bearbeitung durch die erste Werkzeugmaschine gesammelt werden.

Daraus ergibt sich der Vorteil, dass die zweite Werkzeugmaschine nicht nach der Bearbeitung jedes einzelnen Werkstücks in den Ruhemodus versetzt werden muss und nicht vor der Bearbeitung jedes einzelnen Werkstücks wieder in den Arbeitsmodus versetzt werden muss. Sowohl das Versetzen in den Ruhemodus als auch das Versetzen in den Arbeitsmodus sind nämlich jeweils mit einem Zeitaufwand verbunden, wobei insbesondere das Versetzen in den Arbeitsmodus die Gesamtbearbeitungsdauer eines Werkstücks negativ beeinflussen kann, da eine Werkzeugmaschine üblicherweise erst dann beginnt, sich aus dem Ruhemodus in den Arbeitsmodus zu versetzen, wenn ihr ein zu bearbeitendes Werkstück zugeführt wird. Somit kann der Fall eintreten, dass der Werkzeugmaschine bereits ein zu bearbeitendes Werkstück 9 vorliegt, die Werkzeugmaschine aber noch nicht vollständig in den Arbeitsmodus versetzt ist. Außerdem kann durch das Vermeiden des ständigen Versetzens in den Ruhemodus bzw. in den Arbeitsmodus die Verweildauer im Ruhemodus insgesamt verlängert werden. Da weiterhin der Energiebedarf bzw. Leistungsbedarf einer Werkzeugmaschine im Ruhemodus üblicherweise wesentlich geringer ist als im Arbeitsmodus, kann somit der Energiebedarf bzw. Leistungsbedarf der zweiten Werkzeugmaschine reduziert werden, ohne den Bearbeitungsprozess der Werkstücke zu beeinflussen. Insbesondere wird die Gesamtbearbeitungsdauer je Werkstück durch das Werkzeugmaschinensystem nicht verlängert und damit der Herstellungsaufwand nicht vergrößert.

Unter dem Begriff "erste Maschinentaktzeit" bzw. "zweite Maschinentaktzeit" wird im Sinne der Erfindung die zeitliche Dauer verstanden, welche die erste bzw. zweite Werkzeugmaschine zur Bearbeitung eines einzelnen Werkstücks benötigt. Die erste bzw. zweite Maschinentaktzeit bezeichnet somit den Durchsatz der ersten bzw. zweiten Werkzeugmaschine von Werkstücken je Zeiteinheit.

Unter dem Begriff "Werkzeugmaschine" wird im Sinne der Erfindung jegliche Art von Maschine verstanden, welche in der Lage ist, ein Werkstück zu bearbeiten. Beispielsweise kann die Werkzeugmaschine dazu ausgebildet sein, das Werkstück zu gießen, zu feilen, zu fräsen, zu bohren, zu lackieren oder zu erhitzen.

Unter dem Begriff "Ruhemodus" wird im Sinne der Erfindung ein Betriebsmodus einer Werkzeugmaschine verstanden, in welchem die Werkzeugmaschine einen Anteil ihrer Werkzeugmodule bzw. Untersteuereinheiten deaktiviert, um ihren Energiebedarf bzw. Leistungsbedarf zu reduzieren.

Unter dem Begriff "Arbeitsmodus" wird im Sinne der Erfindung ein Betriebsmodus einer Werkzeugmaschine verstanden, in welchem die Werkzeugmaschine Werkstücke bearbeitet und sämtliche Werkzeugmodule bzw. Untersteuereinheiten der Werkzeugmaschine aktiviert sind.

Unter dem Begriff "Untersteuereinheiten" wird im Sinne der Erfindung eine untergeordnete Steuereinheit einer Werkzeugmaschine verstanden, welche dazu ausgebildet ist, ein einzelnes Werkzeugmodul zu steuern. Die Untersteuereinheiten sind der Steuereinheit der Werkzeugmaschine untergeordnet.

Gemäß einer bevorzugten Ausführungsform der Erfindung ist es vorgesehen, dass die zweite Werkzeugmaschine in einen Ruhemodus versetzt wird, wenn ihr keine Werkstücke zur Bearbeitung vorliegen. Da die Werkzeugmaschine im Ruhemodus einen vergleichsweise geringeren Energiebedarf bzw. Leistungsbedarf aufweist als im Arbeitsmodus, kann durch das Versetzen der Werkzeugmaschine in den Ruhemodus für den Fall, dass der Werkzeugmaschine ohnehin keine zu bearbeitenden Werkstücke vorliegen, Energie eingespart werden.

Gemäß einer besonders bevorzugten Ausführungsform der Erfindung ist es vorgesehen, dass der Ruhemodus in eine Vielzahl von Ruhemodusstufen untergliedert ist, wobei bei einem Übergang in den Ruhemodus eine der Vielzahl von Ruhemodusstufen nach Maßgabe einer zu erwartenden Dauer des Ruhemodus ausgewählt wird. Da umgekehrt das Versetzen der Werkzeugmaschine zurück in den Arbeitsmodus eine vorgegebene Zeitspanne benötigt, die abhängig von der Anzahl und der Art der deaktivierten Werkzeugmodule bzw. Untersteuereinheiten ist, kann somit im Hinblick auf den Gesamtbearbeitungsprozess und die Gesamtbearbeitungsdauer vorteilhaft eine jeweils geeignet erscheinende Ruhemodusstufe ausgewählt werden. Je länger dabei die zu erwartenden Dauer des Ruhemodus ist, desto mehr Werkzeugmodule bzw. Untersteuereinheiten der Werkzeugmaschine werden bevorzugt deaktiviert. Der Ruhemodus kann beispielsweise eine sog. Grundmodusstufe, eine sog. Nebenmodusstufe und eine sog. Standby-Modusstufe umfassen, wobei jede der genannten Ruhemodusstufen einen individuellen Leistungsbedarf der Werkzeugmaschine aufweist. Üblicherweise fährt die Werkzeugmaschine mit zunehmender zeitlicher Anhaltedauer des Ruhemodus immer weitere Werkzeugmodule bzw. Untersteuereinheiten herunter, um weitere Energieeinsparungen bzw. Leistungseinsparungen zu ermöglichen, und nähert sich somit stufenweise immer weiter der Standby-Modusstufe an, die in der Regel den geringsten Leistungsbedarf aufweist. Sofern es sich bei der Werkzeugmaschine beispielsweise um eine Schleifmaschine zum Schleifen von Zahnradverzahnungen handelt, kann unmittelbar bei Eintritt des Ruhemodus zunächst in die Nebenmodusstufe geschaltet werden. In der Nebenmodusstufe werden zunächst ausschließlich die Achsantriebe, welche das zu schleifende Zahnrad halten und gemäß den Anforderungen des Schleifvorgangs bewegen, abgeschaltet. Mit fortschreitender zeitlicher Anhaltedauer des Ruhemodus kann die Werkzeugmaschine dann in die Grundmodusstufe übergehen. In der Grundmodusstufe wird die Hauptspindel deaktiviert und weiterhin die pneumatischen und hydraulischen Komponenten der Werkzeugmaschine abgeschaltet. Mit nochmals zeitlicher Anhaltedauer des Ruhemodus schließlich kann die Werkzeugmaschine in die Standby-Modusstufe übergehen und auch die Kühlsysteme und die elektronischen Steuerungssysteme abschalten. Somit wird also der Leistungsbedarf der Werkzeugmaschine während des Ruhemodus stufenweise zunehmend reduziert.

Erfindungsgemäß ist es zudem vorgesehen, dass nach der Bearbeitung durch die erste Werkzeugmaschine eine vorgegebene Anzahl von Werkstücken gesammelt wird. Daraus ergibt sich der Vorteil, dass die zu erwartende zeitliche Dauer des Ruhemodus der zweiten Werkzeugmaschine anhand der zeitlichen Differenz der ersten Maschinentaktzeit, der zweiten Maschinentaktzeit und der vorgegebenen Anzahl von Werkstücken sehr genau vorherbestimmt und gezielt eingestellt werden kann. Es ist dabei unerheblich, ob das Erreichen der vorgegebenen Anzahl von gesammelten Werkstücken durch Zählen der einzelnen gesammelten Werkstücke oder durch Messen der Zeit unter Berücksichtigung der ersten Maschinentaktzeit erkannt wird. In letzterem Fall kann das Erreichen der vorgegebenen Anzahl von gesammelten Werkstücken sehr einfach erkannt werden, indem das Verstreichen einer zeitlichen Dauer, die sich als mathematisches Produkt aus der vorgegebenen Anzahl mit der ersten Maschinentaktzeit ergibt, abgewartet wird.

Gemäß einer besonders bevorzugten Ausführungsform der Erfindung ist es vorgesehen, dass die zweite Werkzeugmaschine aus dem Ruhemodus in einen Arbeitsmodus versetzt wird, wenn die vorgegebene Anzahl von Werkstücken gesammelt wurde. Insbesondere bevorzugt wird die zweite Werkzeugmaschine derart zeitlich abgestimmt wieder in den Arbeitsmodus versetzt, dass sämtliche Werkzeugmodule bzw. Untersteuereinheiten wieder vollständig aktiviert sind, wenn das erste der gesammelten Werkstücke der zweiten Werkzeugmaschine zugeführt wird bzw. die zweite Werkzeugmaschine erreicht. Somit kann der Herstellungsprozess der Werkstücke zeitlich kurz und damit möglichst effektiv und kostengünstig gehalten werden.

Gemäß einer bevorzugten Ausführungsform der Erfindung ist es vorgesehen, dass der ersten Werkzeugmaschine ständig Werkstücke zugeführt werden, sodass sie sich dauerhaft in einem Arbeitsmodus befindet. Somit wird die Gesamtbearbeitungsdauer der Werkstücke durch das Werkzeugmaschinensystem möglichst gering und damit effizient gehalten. Dies gewährleistet gleichzeitig möglichst kostengünstige Herstellung.

Bevorzugt ist es vorgesehen, dass der Energiebedarf ein elektrischer Energiebedarf ist. Da der elektrische Energiebedarf üblicherweise den Hauptteil des Gesamtenergiebedarfs gegenwertiger Werkzeugmaschinen ausmacht, konzentriert sich die Erfindung vorteilhaft hierauf. Zudem lässt sich der elektrische Energiebedarf vergleichsweise einfach messen und kontrollieren. Insbesondere wird der energieeffiziente Arbeitspunkt der Werkzeugmaschine nicht hinsichtlich eines auf Gas, Öl oder Kohle basierenden Energiebedarfs ermittelt.

Weiterhin bevorzugt ist es vorgesehen, dass das Verfahren für jede Werkzeugmaschine, deren Maschinentaktzeit kleiner als die erste Maschinentaktzeit ist und die der ersten Werkzeugmaschine bearbeitungsstechnisch nachgeschaltet ist, wiederholt wird. Daraus ergibt sich der Vorteil, dass für jede derartige Werkzeugmaschine des Werkzeugmaschinensystems jeweils der Energiebedarf reduziert werden kann.

Des Weiteren betrifft die Erfindung ein Werkzeugmaschinensystem, wobei das Werkzeugmaschinensystem zumindest eine erste Werkzeugmaschine mit einer ersten Maschinentaktzeit und eine zweite Werkzeugmaschine mit einer zweiten Maschinentaktzeit umfasst, wobei das Werkzeugmaschinensystem Zuführmittel umfasst, welche dazu ausgebildet sind, gleiche Werkstücke zunächst der ersten und dann der zweiten Werkzeugmaschine in zeitlicher Abfolge zu einer Bearbeitung zuzuführen und wobei die zweite Maschinentaktzeit kleiner als die erste Maschinentaktzeit ist. Das erfindungsgemäße Werkzeugmaschinensystem zeichnet sich dadurch aus, dass das Werkzeugmaschinensystem Zählmittel und Sammelmittel umfasst, wobei die Zählmittel dazu ausgebildet sind, eine vorgegebene Anzahl von Werkstücken zu zählen, welche von der ersten Werkzeugmaschine bearbeitet wurden, wobei die Sammelmittel dazu ausgebildet sind, die vorgegebene Anzahl von Werkstücken zu sammeln bevor sie der zweiten Werkzeugmaschine zuführbar sind und wobei das Werkzeugmaschinensystem zur Ausführung eines erfindungsgemäßen Verfahrens ausgebildet ist.

Da das erfindungsgemäße Werkzeugmaschinensystem also die zur Ausführung des erfindungsgemäßen Verfahrens notwendigen Mittel umfasst, ermöglicht es die im Zusammenhang mit dem erfindungsgemäßen Verfahren bereits beschriebenen Vorteile.

Gemäß einer bevorzugten Ausführungsform der Erfindung ist es vorgesehen, dass das Werkzeugmaschinensystem weiterhin Steuermittel umfasst, wobei die Steuermittel dazu ausgebildet sind, die Zählmittel auszulesen, die Sammelmittel zu steuern und/oder bei Erreichen der vorgegebenen Anzahl ein elektrisches Signal zu erzeugen, welches dazu ausgebildet ist die zweite Werkzeugmaschine aus einem Ruhemodus in einen Arbeitsmodus zu versetzen. Die Steuermittel können beispielsweise als elektronisches Rechenwerk ausgebildet sein, insbesondere als Mikrocontroller. Bevorzugt sind dem elektronischen Rechenwerk auf Datenebene elektronische Speichermittel angegliedert, auf welche das elektronische Rechenwerk lesend und schreibend zugreifen kann. Indem die Steuermittel die zweite Werkzeugmaschine durch das elektrische Signal in den Arbeitsmodus versetzen, ist diese vorteilhaft bereits voll arbeitsfähig, wenn ihr das erste der gesammelten Werkstücke zur Bearbeitung vorliegt.

Das Aktivieren und Deaktivieren der Sammelmittel erfolgt bevorzugt ebenfalls durch ein elektrisches Signal von den Steuermitteln an die Sammelmittel. Indem die Steuermittel die Zählmittel auslesen, können sie das elektrische Signal an die Sammelmittel genau dann ausgeben, wenn die vorgegebene Anzahl erreicht ist.

Gemäß einer bevorzugten Ausführungsform der Erfindung ist es vorgesehen, dass das Werkzeugmaschinensystem weiterhin Signalübertragungsmittel umfasst, wobei die Signalübertragungsmittel dazu ausgebildet sind, das elektrische Signal auf ein Datenübertragungsmedium auszugeben. Somit kann das von den Steuermitteln erzeugte Signal aus der Vorrichtung heraus ausgegeben werden und z.B. mittels des Datenübertragungsmediums zur zweiten Werkzeugmaschine geführt werden. Die Signalübertragungsmittel können z.B. als Buchse oder als Stecker ausgebildet sein und das Datenübertragungsmedium kann als Datenkabel ausgebildet sein. Das Datenkabel ist bevorzugt mittels eines Steckers oder einer Buchse mit den Signalübertragungsmitteln elektrisch koppelbar.

Gemäß einer weiteren bevorzugten Ausführungsform der Erfindung ist es vorgesehen, dass die Sammelmittel eine Werkstückschleuse oder einen einzeln steuerbaren Teilabschnitt eines Förderbands umfassen. Die Werkstückschleuse kann z.B. einen hebbaren und senkbaren Arm umfassen, der im gesenkten Zustand ein Zuführen der Werkstücke zur zweiten Werkzeugmaschine mechanisch blockiert, beispielsweise indem er den Zuführweg der Werkstücke versperrt. Im gehobenen Zustand hingegen gibt der Arm den Zuführweg der Werkstücke frei. Ebenso bevorzugt kann die Werkstückschleuse auch mehr als nur einen hebbaren und senkbaren Arm umfassen. Alternativ kann der Arm bzw. können die Arme der Werkstückschleuse auch horizontal schwenkbar ausgebildet sein, sodass sie seitlich in den Zuführweg der Werkstücke hineingeschwenkt werden können, um diesen zu versperren, und ebenso wieder herausgeschwenkt werden können, um den Zuführweg der Werkstücke freizugeben. Ein einzeln steuerbarer Teilabschnitt eines Förderbands kann beispielsweise abgeschaltet werden, um eine Zuführung der Werkstücke zur zweiten Werkzeugmaschine zu unterbrechen. In diesem Fall kommt es zum Sammeln der Werkstücke am Übergang des abgeschalteten Teilabschnitts zu einem dem abgeschalteten Teilabschnitt vorgeschalteten, nicht abgeschalteten Teilabschnitt.

Gemäß einer weiteren bevorzugten Ausführungsform der Erfindung ist es vorgesehen, dass die Zählmittel eine Lichtschranke umfassen. Mittels der Lichtschranke können die Werkstücke auf einfache Weise gezählt werden, indem die Lichtschranke die Anzahl der an der Lichtschranke vorbeigeführten Werkstücke erfasst und diese von einem Zählwerk, z.B. einem elektronischen Rechenwerk, gezählt werden. Dazu ist eine Datenverbindung der Lichtschranke zum Zählwerk bzw. zum elektronischen Rechenwerk vorgesehen, sofern das Zählwerk bzw. das elektronische Rechenwerk nicht ohnehin in die Lichtschranke integriert ist.

Bevorzugt ist es vorgesehen, dass das Werkzeugmaschinensystem dazu ausgebildet ist, die Werkstücke spanend zu bearbeiten. Da die spanende Bearbeitung von Werkstücken besonders energieaufwändig ist, kann hier durch die erfindungsgemäße Ausbildung des Werkzeugmaschinensystems eine vergleichsweise große Energieeinsparung realisiert werden.

Besonders bevorzugt ist es vorgesehen, dass alle der mindestens zwei Werkzeugmaschinen dazu ausgebildet sind, die Werkstücke spanend zu bearbeiten. Alternativ ist es jedoch möglich und bevorzugt, dass nur eine einzelne oder einige der Werkzeugmaschinen dazu ausgebildet sind, die Werkstücke spanend zu bearbeiten.

Gemäß einer bevorzugten Ausführungsform der Erfindung ist es vorgesehen, dass das Werkzeugmaschinensystem dazu ausgebildet ist, die Werkstücke schleifend und/oder fräsend und/oder drehend zu bearbeiten. Bei einer derartigen Ausbildung des Werkzeugmaschinensystems haben sich hinsichtlich der möglichen Energieeinsparungen besonders vorteilhaft Ergebnisse erzielen lassen.

Ein Schleifprozess bzw. ein Fräsprozess bzw. ein Drehprozess umfassen üblicherweise einen Schruppvorgang sowie einen darauf folgenden Schlichtvorgang. Der Schruppvorgang umfasst dabei das Abheben von Werkstoff von den Werkstücken mit vergleichsweise großem Spanvolumen. Dabei dient der Schruppvorgang dazu, innerhalb möglichst kurzer Bearbeitungszeit das Werkstück der gewünschten Endkontur soweit wie möglich anzunähern. Entsprechend handelt es sich bei Schruppwerkzeugen üblicherweise um vergleichsweise grobzahnige Werkzeuge mit großer Schnitttiefe. Der Schruppvorgang hinterlässt in der Regel eine vergleichsweise raue Oberfläche mit nur geringer Maßgenauigkeit. Die exakte und gewünschte Endkontur eines Werkstücks wird hingegen im darauf folgenden Schlichtvorgang erzeugt.

Schlichtwerkzeuge sind daher üblicherweise wesentlich feinzahniger und weisen eine vergleichsweise geringere Schnitttiefe auf, sodass eine vergleichsweise glattere Oberfläche erzielt wird.

Gemäß einer weiteren besonders bevorzugten Ausführungsform der Erfindung ist es vorgesehen, dass das Werkzeugmaschinensystem dazu ausgebildet ist, Zahnradverzahnungen zu schleifen und/oder zu fräsen. Da gerade das Schleifen bzw. das Fräsen von Zahnradverzahnungen besonders energieaufwändig ist, ergeben sich hier durch die genannte Ausbildungsform des Werkzeugmaschinensystems große Möglichkeiten für Energieeinsparungen.

Gemäß einer weiteren bevorzugten Ausführungsform der Erfindung ist es vorgesehen, dass die Zuführmittel als Förderband ausgebildet sind. Förderbänder stellen weithin bekannte, flexible und vielseitig geeignete Mittel zum Zuführen unterschiedlichster Arten von Werkstücken dar. Zudem sind sie vergleichsweise kostengünstig und robust.

Nachfolgend wird die Erfindung anhand von in den Figuren dargestellten Ausführungsformen beispielhaft erläutert.

Es zeigen:
- Fig. 1: beispielhaft und schematisch eine mögliche Ausführungsform einer erfindungsgemäßen Vorrichtung,
- Fig. 2: beispielhaft und schematisch eine mögliche Ausführungsform eines erfindungsgemäßen Werkzeugmaschinensystems und
- Fig. 3: eine beispielhafte Ausführungsform eines erfindungsgemäßen Verfahrens in Form eines Flussdiagramms.

Gleiche Gegenstände, Funktionseinheiten und vergleichbare Komponenten sind figurenübergreifend mit den gleichen Bezugszeichen bezeichnet. Diese Gegenstände, Funktionseinheiten und vergleichbaren Komponenten sind hinsichtlich ihrer technischen Merkmale identisch ausgeführt, sofern sich aus der Beschreibung nicht explizit oder implizit etwas anderes ergibt.

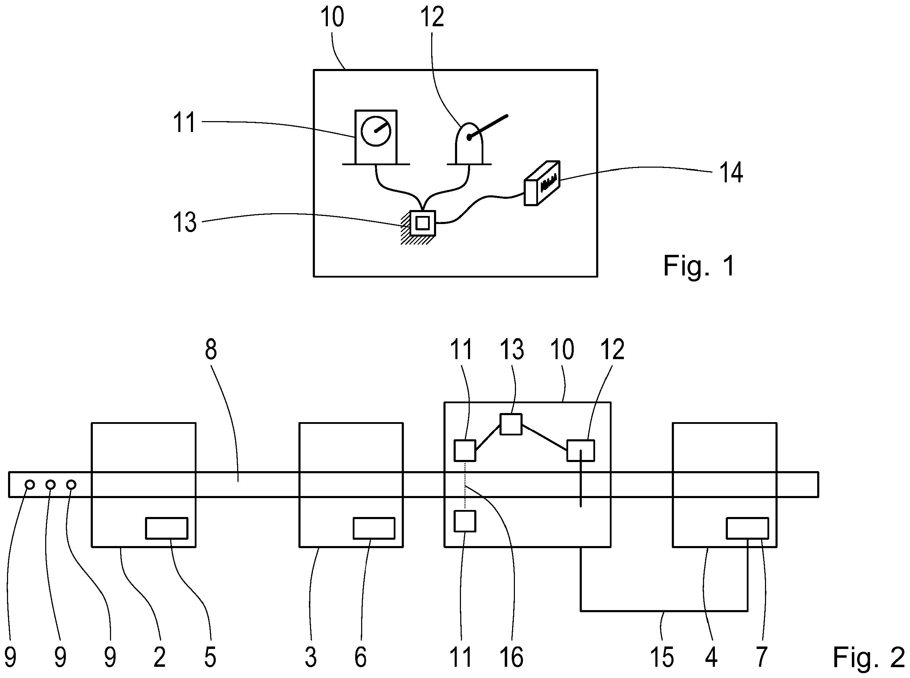

Fig. 1 zeigt schematisch und beispielhaft eine erfindungsgemäße Vorrichtung 10, welche Zählmittel 11, Sammelmittel 12, Steuermittel 13 und Signalübertragungs-mittel 14 umfasst. Die Zählmittel 11 sind beispielsgemäß als schwingquarzbasierter Taktgeber 11 ausgebildet, dessen Taktsignale einen vorgegebenen zeitlichen Abstand aufweisen und von den Steuermitteln 13 gezählt und aufsummiert werden. Die Steuermittel 13 wiederum sind als Mikrocontroller 13 ausgebildet. Die Sammelmittel 12 sind beispielsgemäß als Werkstückschleuse 12 ausgebildet, welche dazu ausgebildet ist, eine Zuführung von Werkstücken 9 an eine nachgeschaltete Werkzeugmaschine 2, 3 oder 4 zu unterbrechen und die Werkstücke 9 bis zum Erreichen einer vorgegebenen Anzahl von Werkstücken 9 zu sammeln. Das Erreichen der vorgegebenen Anzahl von Werkstücken 9 wird beispielsgemäß durch das Verstreichen einer zum Bearbeiten der vorgegebenen Anzahl von Werkstücken 9 durch eine vorgeschaltete Werkzeugmaschine 2, 3 oder 4 benötigten zeitlichen Dauer erkannt. D.h. also, dass die Zählmittel 11 kontinuierlich die Zeit erfassen und die Steuermittel 13 bei Ablauf einer vorgebebenen Zeitspanne darauf erkennen, dass die vorgegebene Anzahl von Werkstücken 9 gesammelt wurde. Sobald die Steuermittel 13 erkennen, dass die vorgegebene Anzahl von Werkstücken 9 gesammelt wurde, geben sie ein elektrisches Signal an die Werkstückschleuse 12, welche daraufhin die gesammelten Werkstücke 9 freigibt, sodass diese von nicht zur Vorrichtung 10 gehörenden und in Fig. 1 nicht dargestellten Zuführmitteln 8 weitergeführt werden können. Gleichzeitig geben die Steuermittel 13 ein elektrisches Signal an die Signalübertragungsmittel 14, welche beispielsgemäß als Buchse für einen Stecker eines Datenübertragungsmediums 15 ausgebildet ist. Beispielsgemäß handelt es sich bei den Signalübertragungsmitteln 14 um eine RJ45-Buchse 14 und bei dem Stecker des Datenübertragungsmediums 15 um einen RJ45-Stecker, wobei das Datenübertragungsmedium als Netzwerkkabel ausgebildet ist. Das von den Steuermitteln 13 an die Signalübertragungsmittel 14 übertragene elektrische Signal ist dazu ausgebildet, eine Werkzeugmaschine 2, 3 oder 4 aus einem Ruhemodus in einen Arbeitsmodus zu versetzen.

Fig. 2 zeigt beispielhaft und schematisch eine mögliche Ausführungsform eines erfindungsgemäßen Werkzeugmaschinensystems 1. Das beispielhaft dargestellte Werkzeugmaschinensystem 1 umfasst drei Werkzeugmaschinen 2, 3 und 4. Jede der Werkzeugmaschinen 2, 3 bzw. 4 umfasst eine Steuereinheit 5, 6 bzw. 7, welche jeweils wiederum eine Vielzahl von untergeordneten, nicht dargestellten Untersteuereinheiten zur Steuerung und Regelung unterschiedlicher, ebenfalls nicht dargestellter Werkzeugmodule der Werkzeugmaschinen 2, 3 bzw. 4 umfassen. Das beispielhaft dargestellt Werkzeugmaschinensystem 1 umfasst außerdem Zuführmittel 8 in Form eines Förderbands 8, auf welchem Werkstücke 9 angeordnet sind. Bei den Werkstücken 9 handelt es sich beispielsgemäß um gleiche, d. h. identische Werkstücke 9, welche als metallische Zylinder ausgebildet sind. Die Werkstücke 9 werden in zeitlicher Abfolge zunächst der Werkzeugmaschine 2, dann der Werkzeugmaschine 3 und schließlich der Werkzeugmaschine 4 zu einer Bearbeitung zugeführt. Die Werkzeugmaschine 2 weist dabei eine Maschinentaktzeit auf, welche beispielsgemäß 20 s beträgt. Dies bedeutet also, dass die Werkzeugmaschine 2 zur Bearbeitung eines Werkstücks 9 20 s benötigt. Bei der Werkzeugmaschine 2 handelt es sich um einen Ofen, welcher die Werkstücke 9 thermisch behandelt. Nachdem die Werkzeugmaschine 2 die Bearbeitung eines Werkstücks 9 beendet hat, wird das Werkstück 9 über das Förderband 8 der Werkzeugmaschine 3 zugeführt. Beispielsgemäß führt die Werkzeugmaschine 3 einen Fräsvorgang an den Werkstücken 9 aus und weist dabei eine Maschinentaktzeit von 25 s auf, was bedeutet, dass sie zur Bearbeitung eines Werkstücks 9 25 s benötigt. Nachdem die Werkzeugmaschine 3 die Bearbeitung eines Werkstücks 9 beendet hat, kann das Werkstück 9 über das Förderband 8 weiter der Werkzeugmaschine 4 zugeführt werden. Die Werkzeugmaschine 4 weist beispielsgemäß eine Maschinentaktzeit von 16 s auf, was bedeutet, dass die Bearbeitungsdauer der Werkzeugmaschine 4 für ein Werkstück 9 16 s beträgt. Beispielsgemäß handelt es sich bei der Werkzeugmaschine 4 um eine Schleifmaschine, welche einen Schruppvorgang und einen Schlichtvorgang an den Werkstücken 9 ausführt. Da die Gesamtbearbeitungsdauer für ein Werkstück 9 durch das Werkstückmaschinensystem 1 beispielsgemäß durch die größte Maschinentaktzeit, also die Maschinentaktzeit der Werkzeugmaschine 3, geprägt ist bzw. dieser entspricht, beträgt Gesamtbearbeitungsdauer also 25 s. Die Werkzeugmaschine 3 stellt nun beispielsgemäß die erste Werkzeugmaschine im erfindungsgemäßen Sinn dar, während die Werkzeugmaschine 4 beispielsgemäß die zweite Werkzeugmaschine im erfindungsgemäßen Sinn darstellt. Da die Maschinentaktzeit der Werkzeugmaschine 4, wie beschrieben, 16 s beträgt und die Maschinentaktzeit der Werkzeugmaschine 3 25 s beträgt, ist die zweite Maschinentaktzeit also kleiner als die erste Maschinentaktzeit. Nach der Bearbeitung eines Werkstücks 9 durch die Werkzeugmaschine 3 wird das Werkstück 9 durch das Förderband 8 von der Werkzeugmaschine 3 zu einer beispielhaft ausgebildeten Vorrichtung 10 geführt. Die Vorrichtung 10 umfassen eine Lichtschranke 11, eine Werkstückschleuse 12 und ein elektronisches Rechenwerk 13, welches die Lichtschranke 11 steuert und ihren jeweiligen Zustand erfasst. Hierfür zählt das elektronische Rechenwerk 13 anhand der Anzahl der Unterbrechungen des Lichtstrahls 16 die Anzahl der Werkstücke 9, die von der Werkzeugmaschine 3 weggeführt werden. Die Lichtschranke 11 stellt die Zählmittel 11 dar, die Werkstückschleuse 12 stellt die Sammelmittel 12 dar und das elektronische Rechenwerk 13 stellt die Steuermittel 13 dar. Der Zustand der Lichtschranke 11 kann beispielsgemäß den Status "Lichtstrahl 16 unterbrochen" und "Lichtstrahl 16 nicht unterbrochen" aufweisen. Jede Unterbrechung des Lichtstrahls 16 zeigt dabei an, dass ein Werkstück 9 an der Lichtschranke 11 vorbeigeführt wurde. Das elektronische Rechenwerk 13 steuert auch den Zustand der Werkstückschleuse 12, die beispielsgemäß einen anhebbaren und absenkbaren Arm als mechanische Schranke aufweist. Der Zustand der Werkstückschleuse 12 kann dabei den Status "geöffnet" und "geschlossen" einnehmen. Abhängig von der Anzahl der gesammelten und von der Lichtschranke 11 bzw. dem elektronischen Rechenwerk 12 gezählten Werkstücke 9, öffnet bzw. schließt das elektronische Rechenwerk 12 die Werkstückschleuse 12. Im geöffneten Zustand können die Werkstücke 9 die Werkstückschleuse 12 passieren, im geschlossenen Zustand hingegen könne die Werkstücke 9 die Werkstückschleuse 12 nicht passieren und werden gesammelt. Das Förderband 8 wird während des Sammelns der Werkstücke 9 nach der Bearbeitung durch die Werkzeugmaschine 3 nicht angehalten bzw. deaktiviert, sondern fördert unabhängig vom Zustand der Werkstückschleuse 12 weiter. Die Werkstückschleuse 12 ist daher entsprechend stabil und mechanisch belastbar ausgebildet, um die Werkstücke 9 auch gegen den vom Förderband 8 erzeugten Förderdrang anzuhalten und zu sammeln, d.h. festzuhalten. Somit werden die Werkstücke 9 also auf dem Förderband 8 festgehalten, während das Förderband 8 kontinuierlich weiterläuft und unter den festgehaltenen Werkstücken 9 "wegrutscht". Sobald die Lichtschranke 11 bzw. das elektronischen Rechenwerk 12 eine vorgegebene Anzahl von beispielsgemäß 17 Werkstücken 9 gezählt hat, öffnet das elektronische Rechenwerk 13 mittels einer Übertragung eines entsprechenden elektrischen Signals die Werkstückschleuse 12, sodass die gesammelten Werkstücke 9 gesammelt der Werkzeugmaschine 4 zugeführt werden können. Gleichzeitig geben die Sammelmittel 10 über ein Signalübertragungsmittel 14 ein elektrisches Signal auf ein Datenübertragungsmedium 15, welches das elektrische Signal zur Steuereinheit 7 der Werkzeugmaschine 4 führt. Das elektrische Signal versetzt die Werkzeugmaschine 4 aus dem Ruhemodus wieder in den Arbeitsmodus. Abhängig von der gewählten Ruhemodusstufe, in welche die Werkzeugmaschine 4 zuvor versetzt wurde, nimmt dies eine Zeitspanne von beispielsgemäß 20 s in Anspruch. Indem die Werkstücke 9, wie beispielhaft beschrieben, durch die Vorrichtung 10 gesammelt werden, kann die zusammenhängende zeitliche Dauer des Ruhemodus der Werkzeugmaschine 4, in der der Werkzeugmaschine 4 keine zu bearbeitenden Werkstücke 9 vorliegen, verlängert werden. Beispielsgemäß beträgt diese zeitliche Dauer nun 153 s. Diese zeitliche Dauer ist bekannt und in der Steuervorrichtung 7 der Werkzeugmaschine 4 hinterlegt. Die Steuervorrichtung 7 ist dazu ausgebildet, die Werkzeugmaschine situationsabhängig in den Ruhemodus bzw. in eine spezielle Ruhemodusstufe und wieder zurück in den Arbeitsmodus zu versetzen. Da der Ruhemodus der Werkzeugmaschine 4 in eine Vielzahl von unterschiedlichen Ruhemodusstufen untergliedert ist, welche nach Maßgabe einer zu erwartenden Dauer des Ruhemodus ausgewählt werden, kann nun ausgehend von der bekannten zu erwartenden Dauer des Ruhemodus von 153 s die Werkzeugmaschine 4 in die Standby-Modusstufe versetzt werden. Die Standby-Modusstufe ist dabei diejenige Ruhemodusstufe, die den vergleichsweise geringsten Leistungsbedarf aufweist, da hier beispielsgemäß sämtliche Werkzeugmodule und die meisten Untersteuereinheiten deaktiviert werden. Wäre die zu erwartende Dauer im Ruhemodus jedoch kürzer, so würde sich ein Versetzen der Werkzeugmaschine 4 in die Standby-Modusstufe nicht lohnen, da aufgrund des Zeitaufwands zum erneuten Aktivieren aller in der Standby-Modusstufe deaktivierten Werkzeugmodule und Untersteuereinheiten eine Verzögerung in der Bearbeitung der Werkstücke 9 erzeugt würde, welche die Gesamtbearbeitungsdauer der Werkstücke 9 auf 28 s verlängern würde. Dies würde einen Effizienz- und Kostennachteil darstellen.

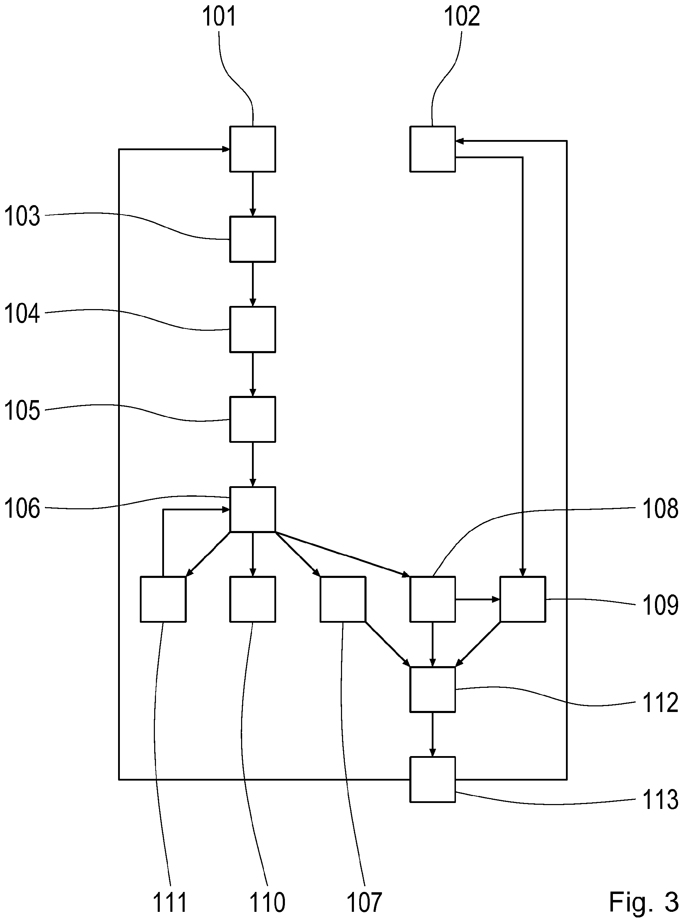

Fig. 3 zeigt eine beispielhafte Ausführungsform des erfindungsgemäßen Verfahrens in Form eines Flussdiagramms. In Verfahrensschritt 101 wird ein Werkstück 9 von einer ersten Werkzeugmaschine 3 mit einer ersten Maschinentaktzeit bearbeitet. Zeitgleich zu Verfahrensschritt 101 befindet sich eine zweite Werkzeugmaschine 4 mit einer zweiten Maschinentaktzeit in Schritt 102 in einem Ruhemodus. Die zweite Maschinentaktzeit ist kleiner als die erste Maschinentaktzeit, was bedeutet, dass die erste Werkzeugmaschine 3 für die Bearbeitung eines Werkstücks 9 länger benötigt als die zweite Werkzeugmaschine 4. In Verfahrensschritt 103 ist die Bearbeitung des Werkstücks 9 durch die erste Werkzeugmaschine 3 abgeschlossen und das Werkstück 9 wird von Zuführmitteln 8 von der ersten Werkzeugmaschine 3 weggeführt. Im folgenden Verfahrensschritt 104 wird das Werkstück 9 von Zählmitteln 11 gezählt und in Schritt 105 von Sammelmitteln 12 gesammelt, bevor es im späteren Verfahrensverlauf der zweiten Werkzeugmaschine 4 zugeführt wird. Die Zählmitteln 11 und die Sammelmittel 12 zählen und sammeln in Schritt 106 noch weitere Werkstücke 9, bis eine vorgegebene Anzahl von Werkstücken 9 gezählt bzw. gesammelt wurde. Sofern die vorgegebene Anzahl von Werkstücken 9 gezählt bzw. gesammelt wurde, so werden in Schritt 107 zunächst die Sammelmittel 12 mittels eines elektrische Signals dazu angeleitet, keine weiteren Werkstücke 9 mehr zu sammeln und den Zuführmitteln 8 zu erlauben, die gesammelten Werkstücke 9 der zweiten Werkzeugmaschine 4 zuzuführen. Gleichzeitig wird in Schritt 108 ein elektrisches Signal an die zweite Werkzeugmaschine 4 ausgegeben, welches diese in Schritt 109 aus dem Ruhemodus in den Arbeitsmodus versetzt. Ebenfalls zeitgleich zu den Schritten 107 und 108 werden in Schritt 110 die Zählmittel 11 zurückgesetzt, so dass diese wieder ausgehend von null anfangen, die von der ersten Werkzeugmaschine 3 bearbeiteten Werkstücke 9 zu zählen. Sofern jedoch die vorgegebene Anzahl von Werkstücken 9 in Schritt 111 noch nicht gezählt bzw. noch nicht gesammelt wurde, so wird das beispielsgemäße Verfahren erneut ab Schritt 106 ausgeführt. In Verfahrensschritt 112 werden nun die gesammelten Werkstücke 9 von der zweiten Werkzeugmaschine 4 bearbeitet. Nachdem die Bearbeitung der gesammelten Werkstücke 9 durch die zweite Werkzeugmaschine 4 abgeschlossen wurde, wird die zweite Werkzeugmaschine 4 in Schritt 113 wieder in den Ruhemodus versetzt und das beispielhaft dargestellte Verfahren beginnt erneut in Schritt 101 bzw. 102.

### Bezugszeichen

- 1: Werkzeugmaschinensystem
- 2: Werkzeugmaschine
- 3: Werkzeugmaschine
- 4: Werkzeugmaschine
- 5: Steuereinheit der Werkzeugmaschine 2
- 6: Steuereinheit der Werkzeugmaschine 3
- 7: Steuereinheit der Werkzeugmaschine 4
- 8: Zuführmittel, Förderband
- 9: Werkstück
- 10: Vorrichtung
- 11: Zählmittel, Lichtschranke, Taktgeber
- 12: Sammelmittel, Werkstückschleuse
- 13: Steuermittel, Mikrocontroller
- 14: Signalübertragungsmittel, RJ45-Buchse
- 15: Datenübertragungsmedium
- 16: Lichtstrahl
- 101: Bearbeiten eines Werkstücks durch die erste Werkzeugmaschine
- 102: zweite Werkzeugmaschine befindet sich im Ruhemodus
- 103: Abschließen der Bearbeitung des Werkstücks durch die erste Werkzeugmaschine
- 104: Zählen des Werkstücks
- 105: Sammeln des Werkstücks
- 106: Zählen und Sammeln weiterer Werkstücke
- 107: Zuführen der gesammelten Werkstücke an die zweite Werkzeugmaschine
- 108: Ausgeben eines elektrischen Signals an die zweite Werkzeugmaschine
- 109: Versetzen der zweiten Werkzeugmaschine in den Arbeitsmodus
- 110: Zurücksetzen der Zählmittel
- 111: Zählen und Sammeln weiterer Werkstücke
- 112: Bearbeiten der gesammelten Werkstücke durch die zweite Werkzeugmaschine
- 113: Versetzen der zweiten Werkzeugmaschine in den Ruhemodus

## Patentansprüche

1. Verfahren zur Reduzierung eines Energiebedarfs einer Werkzeugmaschine (2, 3, 4) eines Werkzeugmaschinensystems (1), wobei das Werkzeugmaschinensystem (1) zumindest eine erste Werkzeugmaschine (3) mit einer ersten Maschinentaktzeit und eine zweite Werkzeugmaschine (4) mit einer zweiten Maschinentaktzeit umfasst, wobei gleiche Werkstücke (9) zunächst der ersten (3) und dann der zweiten Werkzeugmaschine (4) in zeitlicher Abfolge zu einer Bearbeitung zugeführt werden (101, 107) und wobei die zweite Maschinentaktzeit kleiner als die erste Maschinentaktzeit ist, **dadurch gekennzeichnet, dass** die Werkstücke (9) nach der Bearbeitung durch die erste Werkzeugmaschine (3) gesammelt werden (105, 106), bevor sie der zweiten Werkzeugmaschine (4) zugeführt werden (107), wobei nach der Bearbeitung durch die erste Werkzeugmaschine (3) eine vorgegebene Anzahl von Werkstücken (9) gesammelt wird (105, 105, 106).

2. Verfahren nach Anspruch 1,
**dadurch gekennzeichnet, dass** die zweite Werkzeugmaschine (3) in einen Ruhemodus versetzt wird, wenn ihr keine Werkstücke (9) zur Bearbeitung vorliegen (113).

3. Verfahren nach Anspruch 2,
**dadurch gekennzeichnet, dass** der Ruhemodus in eine Vielzahl von Ruhemodusstufen untergliedert ist, wobei bei einem Übergang in den Ruhemodus eine der Vielzahl von Ruhemodusstufen nach Maßgabe einer zu erwartenden Dauer des Ruhemodus ausgewählt wird.

4. Verfahren nach Anspruch 1,
**dadurch gekennzeichnet, dass** die zweite Werkzeugmaschine (4) aus dem Ruhemodus in einen Arbeitsmodus versetzt wird, wenn die vorgegebene Anzahl von Werkstücken (9) gesammelt wurde (109).

5. Verfahren nach mindestens einem der Ansprüche 1 bis 4,
**dadurch gekennzeichnet, dass** der ersten Werkzeugmaschine (3) ständig Werkstücke (9) zugeführt werden, sodass sie sich dauerhaft im Arbeitsmodus befindet.

6. Werkzeugmaschinensystem (1), wobei das Werkzeugmaschinensystem (1) zumindest eine erste Werkzeugmaschine (3) mit einer ersten Maschinentaktzeit und eine zweite Werkzeugmaschine (4) mit einer zweiten Maschinentaktzeit umfasst, wobei das Werkzeugmaschinensystem (1) Zuführmittel (8) umfasst, welche dazu ausgebildet sind, gleiche Werkstücke (9) zunächst der ersten (3) und dann der zweiten Werkzeugmaschine (4) in zeitlicher Abfolge zu einer Bearbeitung zuzuführen und wobei die zweite Maschinentaktzeit kleiner als die erste Maschinentaktzeit ist,
**dadurch gekennzeichnet, dass** das Werkzeugmaschinensystem (1) Zählmittel (11) und Sammelmittel (12) umfasst, wobei die Zählmittel (10) dazu ausgebildet sind, eine vorgegebene Anzahl von Werkstücken (9) zu zählen, welche von der ersten Werkzeugmaschine (3) bearbeitet wurden, wobei die Sammelmittel (12) dazu ausgebildet sind, die vorgegebene Anzahl von Werkstücken (9) zu sammeln, bevor sie der zweiten Werkzeugmaschine (4) zuführbar sind und wobei das Werkzeugmaschinensystem (1) zur Ausführung eines Verfahrens nach mindestens einem der Ansprüche 1 bis 5 ausgebildet ist.

7. Werkzeugmaschinensystem (1)nach Anspruch 6,
**dadurch gekennzeichnet, dass** das Werkzeugmaschinensystem (1) weiterhin Steuermittel (13) umfasst, wobei die Steuermittel (13) dazu ausgebildet sind, die Zählmittel (11) auszulesen, die Sammelmittel (12) zu steuern und/oder bei Erreichen der vorgegebenen Anzahl ein elektrisches Signal zu erzeugen, welches dazu ausgebildet ist, die zweite Werkzeugmaschine (4) aus einem Ruhemodus in einen Arbeitsmodus zu versetzen.

8. Werkzeugmaschinensystem (1)nach Anspruch 7
**dadurch gekennzeichnet, dass** das Werkzeugmaschinensystem (1)) weiterhin Signalübertragungsmittel (14) umfasst, wobei die Signalübertragungsmittel (14) dazu ausgebildet sind, das elektrische Signal auf ein Datenübertragungsmedium (15) auszugeben.

9. Werkzeugmaschinensystem (1) nach mindestens einem der Ansprüche 7 und 8,
**dadurch gekennzeichnet, dass** die Sammelmittel (12) eine Werkstückschleuse (12) oder einen einzeln steuerbaren Teilabschnitt eines Förderbands (8) umfassen.

10. Werkzeugmaschinensystem (1)) nach mindestens einem der Ansprüche 7 bis 8,
**dadurch gekennzeichnet, dass** die Zählmittel (11) eine Lichtschranke (11) umfassen.

11. Werkzeugmaschinensystem (1) nach mindestens einem der Ansprüche 6 bis 10,
**dadurch gekennzeichnet, dass** das Werkzeugmaschinensystem (1) dazu ausgebildet ist, die Werkstücke (9) schleifend und/oder fräsend und/oder drehend zu bearbeiten.

12. Werkzeugmaschinensystem (1) nach Anspruch 11,
**dadurch gekennzeichnet, dass** das Werkzeugmaschinensystem (1) dazu ausgebildet ist, Zahnradverzahnungen zu schleifen und/oder zu fräsen.

13. Werkzeugmaschinensystem (1) nach mindestens einem der Ansprüche 6 bis 12,
**dadurch gekennzeichnet, dass** die Zuführmittel (8) als Förderband (8) ausgebildet sind.

## Claims

1. Method for reducing an energy demand of a machine tool (2, 3, 4) of a machine tool system (1), wherein the machine tool system (1) comprises at least a first machine tool (3) having a first machine cycle time and a second machine tool (4) having a second machine cycle time, wherein identical workpieces (9) are initially supplied to the first machine tool (3) and then to the second machine tool (4) in chronological order in order to be machined (101, 107) and wherein the second machine cycle time is shorter than the first machine cycle time,
**characterized in that** the workpieces (9) are collected (105, 106) after machining by the first machine tool (3) before being supplied (107) to the second machine tool (4), wherein a specified number of workpieces (9) are collected (105, 106) after machining by the first machine tool (3).

2. Method according to Claim 1,
**characterized in that** the second machine tool (3) is moved to an inoperative mode when no workpieces (9) for machining are presented to it (113).

3. Method according to Claim 2,
**characterized in that** the inoperative mode is subdivided into a large number of inoperative mode steps, wherein, when a changeover to the inoperative mode is made, one of the large number of inoperative mode steps is selected in accordance with an expected duration of the inoperative mode.

4. Method according to Claim 1,
**characterized in that** the second machine tool (4) is moved from the inoperative mode to a working mode when the specified number of workpieces (9) have been collected (109) .

5. Method according to at least one of Claims 1 to 4,
**characterized in that** workpieces (9) are continuously supplied to the first machine tool (3), and therefore said first machine tool is permanently in the working mode.

6. Machine tool system (1), wherein the machine tool system (1) comprises at least one first machine tool (3) having a first machine cycle time and a second machine tool (4) having a second machine cycle time, wherein the machine tool system (1) comprises supply means (8) which are designed to supply identical workpieces (9) initially to the first machine tool (3) and then to the second machine tool (4) in chronological order for machining and wherein the second machine cycle time is shorter than the first machine cycle time, **characterized in that** the machine tool system (1) comprises counting means (11) and collecting means (12), wherein the counting means (10) are designed to count a specified number of workpieces (9) which have been machined by the first machine tool (3), wherein the collecting means (12) are designed to collect the specified number of workpieces (9) before they can be supplied to the second machine tool (4) and wherein the machine tool system (1) is designed to execute a method according to at least one of Claims 1 to 5.

7. Machine tool system (1) according to Claim 6,
**characterized in that** the machine tool system (1) further comprises control means (13), wherein the control means (13) are designed to read the counting means (11), to control the collecting means (12) and/or, when the specified number is reached, to generate an electrical signal which is designed to move the second machine tool (4) from an inoperative mode to a working mode.

8. Machine tool system (1) according to Claim 7,
**characterized in that** the machine tool system (1) further comprises signal-transmitting means (14), wherein the signal-transmitting means (14) are designed to output the electrical signal to a data transfer medium (15).

9. Machine tool system (1) according to at least one of Claims 7 and 8,
**characterized in that** the collecting means (12) comprise a workpiece lock (12) or an individually controllable subsection of a conveyor belt (8).

10. Machine tool system (1) according to at least one of Claims 7 and 8,
**characterized in that** the counting means (11) comprise a light barrier (11).

11. Machine tool system (1) according to at least one of Claims 6 to 10,
**characterized in that** the machine tool system (1) is designed to machine the workpieces (9) by grinding and/or milling and/or turning.

12. Machine tool system (1) according to Claim 11,
**characterized in that** the machine tool system (1) is designed to grind and/or to mill gearwheel tooth systems.

13. Machine tool system (1) according to at least one of Claims 6 to 12,
**characterized in that** the supply means (8) are in the form of a conveyor belt (8).

## Revendications

1. Procédé de réduction d'un besoin énergétique d'une machine-outil (2, 3, 4) d'un système de machines-outils (1), le système de machines-outils (1) comprenant au moins une première machine-outil (3) ayant un premier temps de cycle de machine et une deuxième machine-outil (4) ayant un deuxième temps de cycle de machine, des pièces identiques (9) étant tout d'abord amenées (101, 107) à la première (3) et ensuite à la deuxième machine-outil (4) en succession temporelle pour un usinage, et le deuxième temps de cycle de machine étant inférieur au premier temps de cycle de machine, **caractérisé en ce que** les pièces (9) sont collectées (105, 106) après l'usinage par la première machine-outil (3) avant d'être amenées (107) à la deuxième machine-outil (4), un nombre prédéterminé de pièces (9) étant collecté (105, 106) après l'usinage par la première machine-outil (3).

2. Procédé selon la revendication 1, **caractérisé en ce que** la deuxième machine-outil (3) est passée dans un mode de repos lorsqu'elle ne dispose pas de pièces (9) à usiner (113) .

3. Procédé selon la revendication 2, **caractérisé en ce que** le mode de repos est divisé en une pluralité de niveaux de mode de repos ; lors d'une transition vers le mode de repos, l'un de la pluralité de niveaux de mode de repos étant sélectionné en fonction d'une durée attendue du mode de repos.

4. Procédé selon la revendication 1, **caractérisé en ce que** la deuxième machine-outil (4) est passée du mode de repos à un mode de travail lorsque le nombre prédéterminé de pièces (9) a été collecté (109).

5. Procédé selon au moins l'une quelconque des revendications 1 à 4, **caractérisé en ce que** des pièces (9) sont constamment amenées à la première machine-outil (3), de telle sorte qu'elle se trouve en permanence dans le mode de travail.

6. Système de machines-outils (1), le système de machines-outils (1) comprenant au moins une première machine-outil (3) ayant un premier temps de cycle de machine et une deuxième machine-outil (4) ayant un deuxième temps de cycle de machine, le système de machines-outils (1) comprenant des moyens d'amenée (8), qui sont configurés pour amener des pièces identiques (9) tout d'abord à la première machine-outil (3) et ensuite à la deuxième machine-outil (4) en succession temporelle pour un usinage, et le deuxième temps de cycle de machine étant inférieur au premier temps de cycle de machine, **caractérisé en ce que** le système de machines-outils (1) comprend des moyens de dénombrement (11) et des moyens de collecte (12), les moyens de dénombrement (10) étant configurés pour dénombrer un nombre prédéterminé de pièces (9) qui ont été usinées par la première machine-outil (3), les moyens de collecte (12) étant configurés pour collecter le nombre prédéterminé de pièces (9) avant qu'elles ne puissent être amenées à la deuxième machine-outil (4), et le système de machines-outils (1) étant configuré pour réaliser un procédé selon au moins l'une quelconque des revendications 1 à 5.

7. Système de machines-outils (1) selon la revendication 6, **caractérisé en ce que** le système de machines-outils (1) comprend en outre des moyens de commande (13), les moyens de commande (13) étant configurés pour lire les moyens de dénombrement (11), pour commander les moyens de collecte (12) et/ou pour générer un signal électrique lorsque le nombre prédéterminé est atteint, lequel signal étant configuré pour faire passer la deuxième machine-outil (4) d'un mode de repos à un mode de travail.

8. Système de machines-outils (1) selon la revendication 7, **caractérisé en ce que** le système de machines-outils (1) comprend en outre des moyens de transmission de signal (14), les moyens de transmission de signal (14) étant configurés pour fournir le signal électrique à un support de transmission de données (15).

9. Système de machines-outils (1) selon au moins l'une quelconque des revendications 7 et 8, **caractérisé en ce que** les moyens de collecte (12) comprennent un sas à pièces (12) ou une section partielle d'une bande de transport (8) pouvant être commandée individuellement.

10. Système de machines-outils (1) selon au moins l'une quelconque des revendications 7 à 8, **caractérisé en ce que** les moyens de dénombrement (11) comprennent une barrière lumineuse (11) .

11. Système de machines-outils (1) selon au moins l'une quelconque des revendications 6 à 10, **caractérisé en ce que** le système de machines-outils (1) est configuré pour usiner les pièces (9) en les rectifiant et/ou en les fraisant et/ou en les tournant.

12. Système de machines-outils (1) selon la revendication 11, **caractérisé en ce que** le système de machines-outils (1) est configuré pour rectifier et/ou fraiser des dentures de roues dentées.

13. Système de machines-outils (1) selon au moins l'une quelconque des revendications 6 à 12, **caractérisé en ce que** les moyens d'amenée (8) sont configurés sous forme de bande de transport (8).
